(19) Europäisches Patentamt / European Patent Office / Office européen des brevets

(11) **EP 4 100 702 B1**

(12) **EUROPEAN PATENT SPECIFICATION**

(45) Date of publication and mention of the grant of the patent:
**13.08.2025 Bulletin 2025/33**

(21) Application number: **20928849.7**

(22) Date of filing: **31.03.2020**

(51) International Patent Classification (IPC):
**G01D 9/02** (2006.01)     **G06F 3/00** (2006.01)

(52) Cooperative Patent Classification (CPC):
**B01D 3/02; B01D 3/42;** G05B 23/0216; G05B 23/0272

(86) International application number:
**PCT/US2020/025914**

(87) International publication number:
**WO 2021/201839 (07.10.2021 Gazette 2021/40)**

(54) **EMPERICAL DATA MANAGEMENT SYSTEMS AND METHODS OF USE**

SYSTEME ZUR VERWALTUNG VON EMPIRISCHEN DATEN UND VERFAHREN ZUR VERWENDUNG

SYSTÈMES DE GESTION DE DONNÉES EMPIRIQUES ET PROCÉDÉS D'USAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2022 Bulletin 2022/50**

(73) Proprietor: **Elemental Machines, Inc.**
**Salem, New Hampshire 03079 (US)**

(72) Inventors:
• **HARDING, Ian**
  **Wells Somerset BA5 2TT (GB)**
• **IYENGAR, Sridhar**
  **Salem, New Hampshire 03079 (US)**

(74) Representative: **Henkel & Partner mbB**
**Patentanwaltskanzlei, Rechtsanwaltskanzlei**
**Maximiliansplatz 21**
**80333 München (DE)**

(56) References cited:
US-A1- 2004 122 297     US-A1- 2007 208 800
US-A1- 2014 100 878     US-A1- 2014 135 040
US-A1- 2019 242 741     US-B2- 7 555 492
US-B2- 8 548 950        US-B2- 8 984 083
US-B2- 9 489 485        US-B2- 9 954 976

## Description

**Cross-Reference to Related Applications:**

This application is related to US Prov. Application Serial No. 62/739,427 filed on October 1, 2018; US Application Serial Nos. 16/589,347 and 16/589,713 filed on October 1, 2019; and PCT Application Serial Nos. PCT/2019/53941 and PCT/2019/53977 filed on October 1, 2019.

**Background of the Invention:**

Primary documentation of information has typically been in the form of notebooks (for example, laboratory notebooks, financial transaction ledgers, etc.), which have evolved over time to support legal, supply-chain, manufacturing, healthcare, financial and intellectual-property activities as well as scientific activities. However, with computerization of organizations (such as laboratories, factories, hospitals, etc.), data is now commonly collected and stored in electronic form, analyzed in electronic form and published in electronic form, rendering hand-written notebooks an increasingly anachronistic method of primary record keeping.

One example is with how information and data are collected in scientific applications and processes. Looking at researchers and scientists in particular, the persistence of hand-written laboratory notebooks is not simply a reflection of conservatism on behalf of scientists, but is in part attributable to legal requirements, with counter-signed, dated notebook entries being a simple way to demonstrate for intellectual property purposes the time of invention and for compliance with Good Laboratory Practice (GLP) regulations that the record is original and unaltered. However, electronic data collection and storage systems are now becoming available that offer compliance with these regulations.

Systems for electronic data collection and storage (e.g. an empirical data management system (EDMS) can be divided into at least two types. A first type is the Laboratory Information Management System (LIMS), a software system dedicated to managing laboratory-based information such as sensor monitoring, workflow and sample tracking, and collecting the data these generate in an environment that complies with GLP principles for electronic data. The typical customers for LIMS are laboratory managers. LIMSs provide a centralized data repository that complies with a range of regulations for electronic storage and support various methods of using the data, such as alerts and monitoring, a GUI dashboard etc. Example LIMS include those sold under the tradenames TetraScience (by TetraScience), DeviceLink and SmartVue (both by Thermo Fisher Scientific), Tiamo (by Metrohm), Monnit (by Monnit), Rees (by ReesScientific), SmartSense (by Digi), Minus80 (by Minus80monitoring), Tempurity (by Networked Robotics), VisioNize (by Eppendorf), Traxx (by Klatu) and Model AMS (by Hampshire Controls Corp).

A second type of an EDMS system is the Scientific Data Management System (SDMS). More ambitious in scope than a LIMS, an SDMS collects and manages data from larger scientific instruments, providing fully compliant data storage, various management functions for example workflow management, equipment management (scheduling use and maintenance) and an Electronic Laboratory Notebook (ELN). ELNs provide to users an interface to the system that allows them to capture, manage, securely share, and permanently archive and retrieve electronic records in ways that provide the same legal, regulatory, technical and scientific compliance that is provided to the source data. This ELN interface provides context and structure to different types of data; a generic form of ELN gives a flexible platform to support research work, embedding images, sound files, representations of data from a range of instruments and analysis packages into a narrative contained in descriptive text, while more specific applications provide more structured interfaces tailored to particular tasks. The generic form can thus provide validation of 'first to invent' during the patent process and a platform to share work across a group, while more specific applications can be tailored to provide compliance with individual GLP requirements and records destined for archiving. The typical customers for SDMS's are researchers. Example SDMSs include those sold under the tradenames StarLims (by Abbott Informatics), Core (by Thermo Fisher Scientific), LabInspector (by StackWave), LogiLab (by Agaram Technologies), NuGenesis (by Waters), sciCloud (by LabLynx) and Scilligence SDMS (by Scilligence).

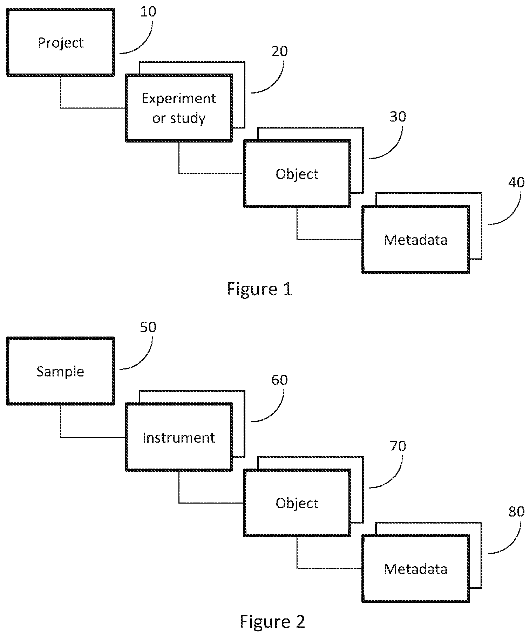

Instrument data can be embedded in ELN entries according to methods disclosed in US patent application ser. No. 2007/0208800 and US patent nos. 8,984,083, 8,548,950 etc. When data is embedded it is common that only part of data is immediately visible in the ELN, with contextual data known as 'metadata' being associated with the embedded data but not immediately visible. Figure 1 gives examples of file structures to support metadata, but less hierarchical structure is also possible, such as described in US patent 9,954,976. ELNs commonly give ready access to metadata, which gives ELNs an advantage over traditional laboratory notebooks where associated data is either entered into the notebook manually or not at all, potentially leading to a situation where ELNs offer much richer contextual data than the traditional laboratory notebook. This is because in addition to manual entry, ELNs can collect metadata automatically.

Metadata is attached to data, often in a file hierarchy, as data is moved from the instrument that generated it, through the file (e.g. database) where it is stored, through any analytical packages that, or modules configured with logic to, manipulate the data and to the interfaces where it is used such as ELNs. One ordinarily skilled in the art therefore recognizes that metadata can contain various forms of information that reflect this movement. A first type of metadata is that associated with the measuring instrument that generated the data; US patent 9,489,485 describes this as data that gives meaning and context to the interpretation of the measurements; US patent 9,954,976 describes instrument GUI display data as a type of metadata. Such metadata can cover not only instrument settings, but also make, model and serial number of measuring equipment, an institution's asset number and/or identity number within a quality system, personnel running the instrument etc., with this type of metadata being appended to the measurement data as it is generated by the instrument or passes through the control unit associated with the instrument (e.g. a PC or module programmed with logic used in its operation). A second type of metadata is that associated with the Local Area Network (LAN) through which the data passes, such as timestamps of recording and system topology, and the data's position in an information hierarchy, such as research group, project, grant, experiment, sample etc. US Patent 7,555,492 describes a series of such annotations after measurement data: tube and reagent information, sample information, subject information and study and experiment information. A third type of metadata is that appended by scientists. Example methods to support manual identification of data to be appended are described in US patents 8,984,083 and 9,489,485.

Research into metadata appended by scientists is reported in 'Creating Context for the Experiment Record. User-Defined Metadata: Investigations into Metadata Usage in the LabTrove ELN' by C. Willoughby, C. L. Bird, S. J. Coles and J. G. Frey in the Journal of Chemical Information and Modeling, 2014, Vol 54 pp3268 - 3283. This study shows that what scientists think to add to the metadata follows what has already been established; ELN sections are given finer granularity and tailored terms that describe how those sections fit into alternative hierarchies (in terms used in the study, these are 'high-level' classifications, both 'things' and less frequently 'activities', with cited example categories including Activities, Codes, Dates and Values, Equipment and Instruments, Labels, and Materials), but also introduce tags for topics ('Specific' classifications). Scientists also occasionally add 'key-value' pairs as metadata (only slightly over half of all notebooks studied used at least one key and only about a third used more than three keys), again dominated by hierarchical classification. Scientists themselves therefore show little imagination in their use of metadata, only appending further cataloging and classification terms.

US 2019/242741 A1 discloses a system comprising:

- one or more gas well sites configured to supply gas to a gas plant, each gas well site comprising a gas well connected to a piping, one or more valves installed on the piping, one or more pressure sensors configured to measure a pressure of the gas in the piping, one or more temperature sensors configured to measure a temperature of the gas in the piping, one or more venturi meters configured to measure a differential pressure of the gas in the piping, and one or more programmable logic controllers configured to:
  receive the measured data from the pressure sensors, temperature sensors, and the venturi meters;
- receive a plurality of dimensions of the one or more venturi meters;
- receive a plurality of fluid properties values; and
- determine a first gas rate and first condensate rate for each of the well sites;
  one or more server sites for storing the measured data, the dimensions of the venturi meters, the fluid properties values, the gas rate, and the condensate rate for each of the well sites; and
- one or more processors, and a non-transitory computer-readable medium in communication with one or more processors and having stored thereon a set of instructions that when executed cause the one or more processors to perform operations including:

  - receiving the measured data from the one or more server sites;
  - receiving the plurality of dimensions of the one or more venturi meters from the one or more server sites;
  - receiving the plurality of fluid properties values from the one or more server sites;
  - determining a second gas rate and a second condensate rate for each of the well sites;
  - comparing the second gas rate to the first gas rate and the second condensate rate to the first condensate rate; and
    identifying one or more problems associated with one or venturi meters in one or more gas well sites.

In addition, US 2004/122297 A1 relates to a programmable device having machine executable instructions for performing a method for use in correlating data to manage a patient's health, the method comprising: acquiring data related to the patient's health, including: acquiring one or more trended health-related parameters; and acquiring at least one of one or more predetermined health-related events and one or more health-related alerts; and determining a correlation among the one or more trended health-related parameters, and the at least one of the one or more predetermined health-related events and the one or more health-related alerts.

Additional ways to improve use of record keeping and data storage in scientific and manufacturing advances are needed. Furthermore, additional ways to classify and describe data, for example via use of additional types and/or classes of metadata, would likewise make scientific processes and record keeping thereof more robust.

**Brief Summary of the Invention:**

The present invention relates to an empirical data management system (EDMS) in accordance with claim 1 and to a method for using an empirical data management system (EDMS) in accordance with claim 7.

Accordingly, the present invention relates to an empirical data management system (EDMS) such as an Electronic Laboratory Notebook (ELN) system or a Laboratory Information Management System (LIMS), said EDMS comprising:

an application server running an EDMS server application;

a process instrument in communication with the application server, wherein the process instrument is configured to determine process data from an experimental or manufacturing process;

an environmental sensor unit in communication with the application server, wherein the environmental sensor unit is configured to determine environmental data describing an environmental condition of the process instrument;

a data storage system in communication with the application server, wherein the data storage system comprises specified environmental operating ranges of the process instrument and an aggregated data file comprising process data received from the process instrument and environmental data received from the environmental sensor unit describing the environmental condition of the process instrument, wherein environmental data is stored in the aggregated data file as metadata which characterizes the environmental condition of the process instrument at the time the process data is received from the process instrument; and

a correlation module programmed with instructions and logic to compare data stored in the data storage system including the specified environmental operating ranges of the process instrument and environmental data stored as metadata in the aggregated data file to determine if a correlation exists between environmental data stored as metadata in the aggregated data file and the specified operating ranges of the process instrument, wherein the correlation is whether or not environmental data stored as metadata in the aggregated data file is within the specified operating ranges of the process instrument, wherein upon determination of existence of the correlation, the correlation module is programmed with instructions and logic to prompt a user with a message warning the user that environmental data stored as metadata in the aggregated data file is not within the specified environmental operating ranges of the process equipment and a further message selected from the group consisting of:

(i) a recommendation to modify process data; (ii) a recommendation to calculate a correction or offset factor for process data received from the process instrument; (iii) a recommendation to modify a result of the experimental or manufacturing process; (iv) a recommendation to abandon the experimental or manufacturing process; and (v) a recommendation to modify a process step, process run, or process protocol of the experimental or manufacturing process.

Furthermore, the present invention relates to a method for using an aforementioned empirical data management system (EDMS), comprising the steps of:

(a) providing an aforementioned EDMS;

(b) receiving data in the application data server, wherein the data is received from the process instrument and from the environmental sensor unit;

(c) determining in the correlation module if a correlation exists between two or more of process data, environmental data, and specified environmental operating ranges of the process instrument, and

(d) if it is determined in step (c) that a correlation exists, prompting a user with a message warning the user that the environmental data stored as metadata in the aggregated data file is not within the specified environmental operating ranges of the process equipment and a further message selected from the group consisting of: (i) a recommendation to modify process data; (ii) a recommendation to calculate a correction or offset factor for process data; (iii) a recommendation to modify a result; (iv) a recommendation to abandon the experimental or manufacturing process; and (v) a recommendation to modify a process step, process run, or process protocol in the experimental or manufacturing process.

Preferably, the EDMS system further comprises an instrument control unit in communication with the environmental sensor unit and/or the process instrument and the application server, wherein the instrument control unit comprises hardware, instructions, and logic to receive the message received from the correlation module and to provide the message to the user, and optionally wherein the instrument control unit is an instrument interface unit (IIU) programmed with instructions and logic for establishing a controlled process workflow by a user and for establishing a controlled flow of data between the application server and the process instrument and/or the environmental sensor unit, for example wherein the IIU comprises one or more pieces of hardware selected from the group consisting of: a display, bar code scanner, RFID scanner, NFC reader, QR code scanner, speaker, microphone, non-contact gesture sensor, secure payment interface, and camera, for example wherein the one or more pieces of hardware are configured to receive data input by the user.

In accordance with a further preferred embodiment of the present invention, the specified environmental operating ranges of the process instrument of the EDMS include ranges of environmental variables selected from the group consisting of: temperature, humidity, light intensity, light wavelengths, vibration, gas concentration, air pressure, volatile organic compounds (VOC) concentration, particulate level, air pollution level, calibration information, user information, and equipment use information, and optionally the data stored in the storage system further comprises data types selected from the group consisting of project data, experiment data, object data, user data, inventory data, maintenance data and usage data.

In a further development of the idea of the present invention, it is proposed that the process instrument of the EDMS is selected from the group consisting of: laboratory equipment, manufacturing equipment, testing equipment, medical equipment, and facility management equipment and wherein the correlation determination is performed by statistical analysis and/or statistical comparison of two or more of process data, environmental data, and specified environmental operating ranges of the process instrument.

Furthermore, it is preferred that the EDMS further comprises a client workstation running an EDMS client application in communication with the application server, wherein upon determination of existence of the correlation, the correlation module is programmed with instructions and logic to prompt a user using the client workstation with the message.

In accordance with still a further preferred embodiment of the present invention, the correlation module message recommendation options (i-v) further comprises an instruction to perform the recommended action and/or an instruction on how to perform the recommended action.

**Brief Description of the Drawing**

Fig. 1 shows an exemplary file structure in accordance with an embodiment of the present invention.

Fig. 2 shows another exemplary file structure in accordance with an embodiment of the present invention.

Fig. 3 shows experimental data demonstrating how environmental conditions can affect volume dispensed by a pipetting robot.

Fig. 4 shows experimental data demonstrating weight change in caffeine samples at various humidity levels.

Figs. 5 to 8 show exemplary systems including those in support of electronic laboratory notebook (ELN) and data storage systems according to embodiments of the present invention.

Fig. 9 shows correlation information that can be used in a data analysis step or module.

Fig. 10 shows additional correlation information that can be used in a data analysis step or module.

Fig. 11 show an exemplary laboratory/experiment setup which employs an environmental sensor unit in connection with a network running an ELN.

**Detailed Description of the Invention**

Collectively, empirical data management systems (EDMS) comprises Laboratory Information Management System (LIMS), Scientific Data Management System (SDMS), Electronic Laboratory Notebook (ELN), and the like. In some preferred embodiments, ELNs are selected as the EDMS due to the robustness of ELN systems and their capabilities.

The present invention provides additional ways to classify and describe data from laboratory and manufacturing equipment/instruments, for example via use of additional types and/or classes of metadata that make scientific processes, record keeping, and data analysis more robust. Measurement, recordation and use of this additional type/class of metadata can provide higher visibility of process mechanics and process steps which in turn can lead to significant advances in understanding of these processes and their results.

One type of information not represented in metadata previously created and/or recorded in the art is data related to measurements of environmental conditions about instruments (e.g. in a lab or manufacturing facility etc.) at the time measurements are made by these instruments and/or about materials at or around the time these materials are used or stored. This omission reflects the present way that metadata is appended to measurements, accumulating as data passes through a network. Since measurements of environmental conditions are made by sensors that are either peripheral to a network or present only on a separate network or remote sensor, instrument measurements do not cross paths with environmental data and so environmental data does not get 'stuck' onto (e.g. appended to or associated with) instrument measurements as metadata or some other data file. Furthermore, even though users have the facility to seek out and append or associate such information, the evidence is that they do not do this. It is not clear whether this is because users do not recognize they have the facility to do this, users do not have the skills to use the facilities to do this, or do not think there is any value in doing this. Whatever the reason, there is ample evidence that environmental conditions frequently have important effects on instrument measurements, even if they are overlooked.

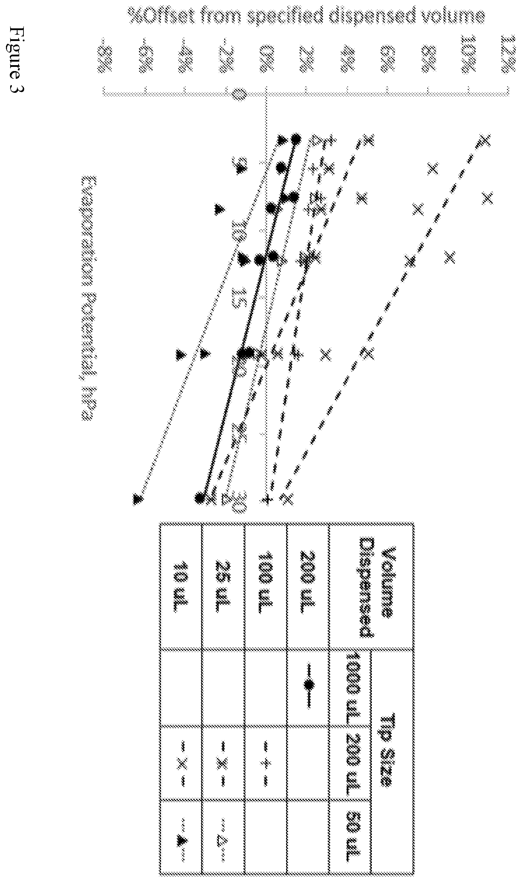

One example of the impact of environmental conditions on instruments is shown in Fig. 3. This shows experimental data from http://www.artel-usa.com/resource-library/does-weather-affect-pipetting-yes/ illustrating how environmental conditions can affect volume dispensed by a Tecan Freedom EVO pipetting robot. Fig. 3 shows that variations of 6 to 10% in dispensed volume is possible, according to changes in environmental conditions (in this study, relative humidity of 30 to 80% and temperature of 15 to 30 °C). Although the results have been obtained from only one type of dispenser, it is an aspirate-dispense pipettor using standard pipette tips, so the results are transferrable to a wide range of robotic pipettors and manually operated pipettes.

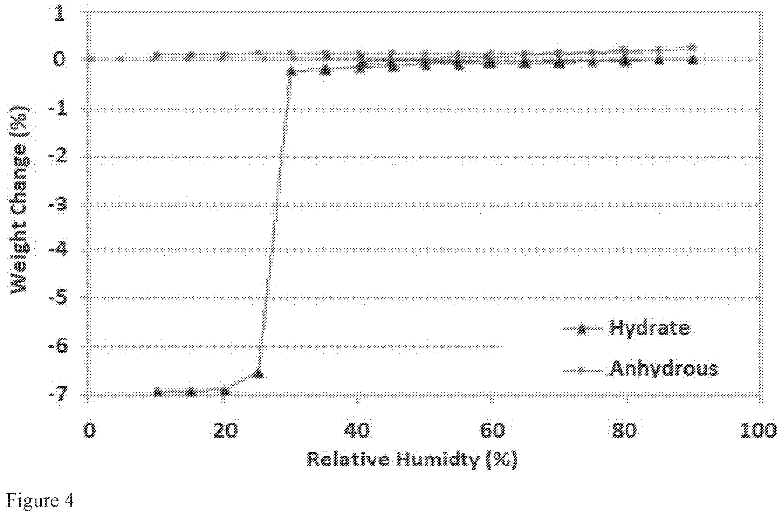

A second example showing the impact of humidity on weighing is shown in Fig. 4. This shows experimental data from 'Identification of Phase Boundaries in Anhydrate/Hydrate Systems' J. F. Krzyzaniak G. R. Williams, N. Ni J. Pharma. Sci., 2007 Vol 96, pp1270-1281. Data shown is weight change in caffeine samples in a VTI moisture balance at 25 °C. This shows that where a solid has more than one hydration state, the form that is stable can change according to environmental humidity, having significant impact on the moles of chemical weighed in a specified mass. The paper also shows the transition point between phases changes according temperature. Such impact is not limited to caffeine; many compounds have more than one isolable hydration state - this is sometimes utilized to advantage in well studied cases, e.g. in the color-changing cobalt chloride used in desiccant pellets, but more often is a confounding variable in preparing solutions and reacting compounds in laboratories. Furthermore, change in hydration state is just one reason for moisture absorption; other reasons include pore condensation in fine powders, hygroscopic behavior and reactivity towards water vapor, all of which introduce effects to downstream use of such solids.

Since environmental conditions like temperature and humidity can have detectable and sometimes strong influences on preparation steps like weighing and making solutions, it is clear they will therefore have influence on experiments and measurements made on solids and solutions too. This influence is also likely to be associated with duration of exposure to an environment. However, researchers' ability to identify and react to these influences is going to be limited by their access to data on both the effect and the cause. While the effect, changes in the output of an experiment or measurement, may be noted by researchers, the role in these changes of environmental conditions (and duration of exposure to them) will be missed if measurements of them are not available.

The present Inventors have determined that inverting the logic is more important. In particular, the more available the measurements of environmental conditions are made to researchers (and also to blind, automated, correlation-finding tools) the better the chances are that the impact of environmental conditions on measurements will be identified.

The present invention provides systems and methods of great utility which relate environmental data (preferably with measurement data) in a file system. This can be accomplished via various embodiments described herein where environmental data is aggregated with or appended to measurement data (preferably as metadata) in a file system (e.g. such as one having optical and/or electronic storage means in a file structure and/or file hierarchy etc.).

Figures 1 and 2 show example file structures of different data types and their dependency provided by an EDMS in accordance with the present invention. In Figure 1 the file structure follows closely research project management, with a project 10 containing one or more experiments or studies 20, each containing one or more objects 30 such as instrument readings, results, images, graphs etc., each having appended metadata 40. This structure reflects is similar to that described in US patent application 2007/0208800A1 and US patent 9,489,485. In Figure 2, a different file structure that follows more closely an analytical laboratory workflow is illustrated, where primary classification is by sample 50, containing one or more Instrument files 60, each containing one or more objects 70 such as instrument readings, results, images, graphs etc., each having appended metadata 80.

Figure 3 shows experimental data from http://www.artel-usa.com/resource-library/does-weather-affect-pipetting-yes/ illustrating how environmental conditions can affect volume dispensed by a Tecan Freedom EVO pipetting robot. The y-axis shows offset in the measurement from the specified dispense volume, calculated as the difference between actual dispensed volume and specified dispense volume, expressed as a % of the specified dispense volume. The x-axis shows Evaporation Potential, which is the shortfall between saturated vapor pressure of water and the actual ambient partial pressure of water. It can be determined as the product of $(1 - \%RH/100)*P_{sat}$, where %RH is the relative humidity and Psat is the saturated vapour pressure of water, determined from the measured temperature, T (in Kelvin), using the formula $\log_{10}(P_{sat}) = -2248.1/T + 9.0327$.

Figure 4 shows experimental data from 'Identification of Phase Boundaries in Anhydrate/Hydrate Systems' J. F. Krzyzaniak G. R. Williams, N. Ni J. Pharma. Sci., 2007 Vol 96, pp1270-1281. Data shown is weight change in caffeine samples in a VTI moisture balance at 25 °C.

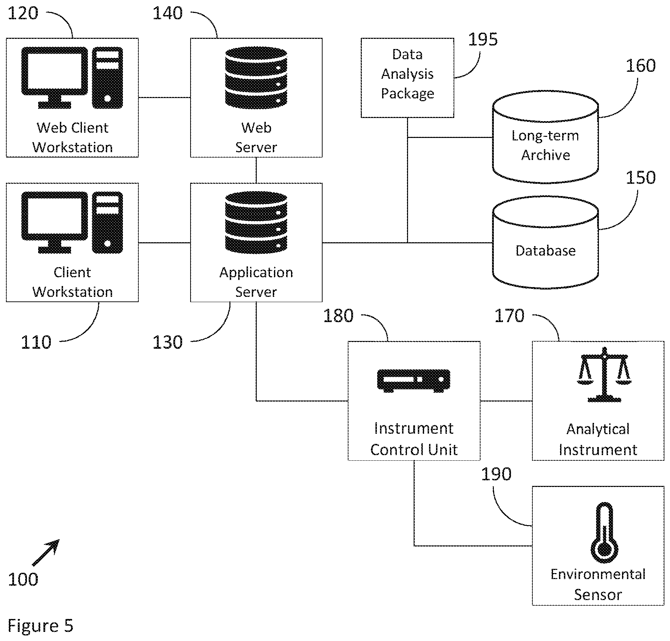

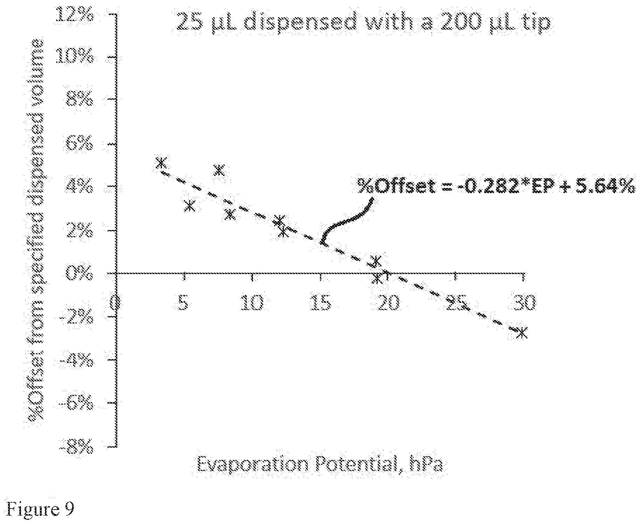

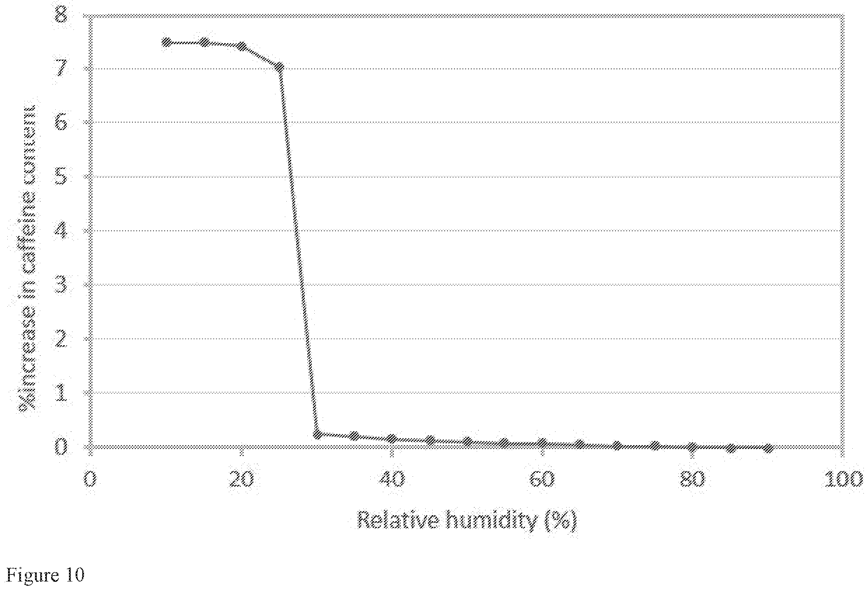

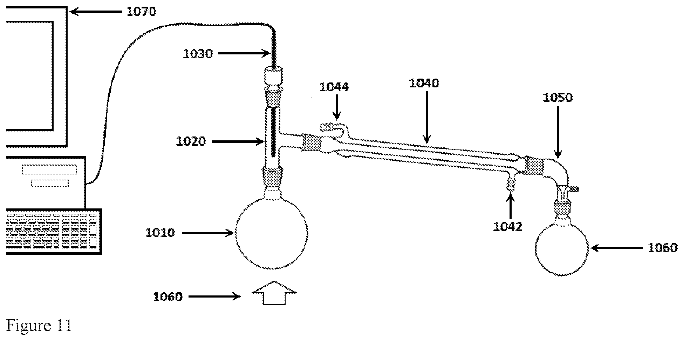

Figures 5 to 8 show exemplary systems for supporting the electronic laboratory notebook (ELN) according to the present invention and are more fully described below. Figure 9 shows correlation information that can be used in a data analysis step or module. Figure 10 shows additional correlation information that can be used in a data analysis step or module. Figure 11 show an exemplary laboratory/experiment setup which employs an environmental sensor unit in connection with a network running an ELN.

## *Exemplary System Architectures and Methods of Use Thereof*

Figure 5 illustrates an embodiment of an exemplary system 100 for use as, or for supporting, the electronic laboratory notebook (ELN) and/or aggregated data file systems . Two exemplary client workstations 110, 120 are shown which may be connected to the application server 130 using any of a variety of methods known in the art. In this exemplary embodiment workstation 110 is running a full EDMS (e.g. an ELN) application (e.g. a full client workstation), and remote workstation 120 is running a world wide web EDMS (e.g. an ELN) application (e.g. a web client workstation) optionally at on offsite location.

The web client workstation 120 can be connected via the Internet, or alternatively by a web server 140 to a distributed communication network or LAN comprising the application server 130 and optionally the full client workstation 110. It will be recognized that the web client workstation 120 also could be directly connected to the LAN. The LAN further includes a shared data storage system or facility 150 (e.g. database 150) and optionally a long-term data storage system or facility 160 (e.g. archive 160). Preferably, the shared database 150 is a multi-user, multi-view relational database such as for non-limiting example an ORACLE database, etc. The long-term data archive 160 is used to provide virtually unlimited amounts of "virtual" disk space (e.g. by means of a multi-layer hierarchical storage management system). The process instrument or measurement instrument (e.g. analytical instrument 170 or instrument selected from the group consisting of laboratory equipment and manufacturing equipment), respectively, is connected to the LAN (an hence to the application server 130) optionally through an instrument control unit

180 and environmental sensor 190 can also be connected to the LAN through instrument control unit 180. One or more data analysis packages/modules 195 may also be attached to the network and or application server. The data analysis packages/modules are programmed with logic/instructions for performing actions on received data such as analyzation, organization, aggregation, sorting, storing, altering, modifying, etc.

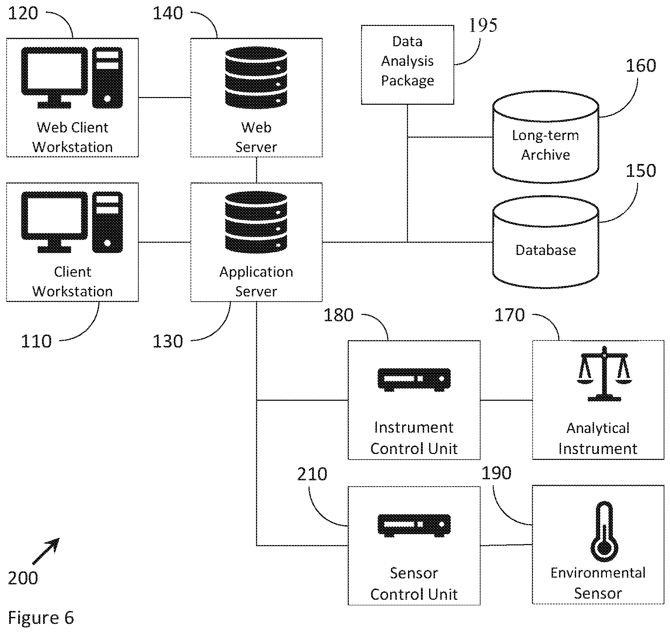

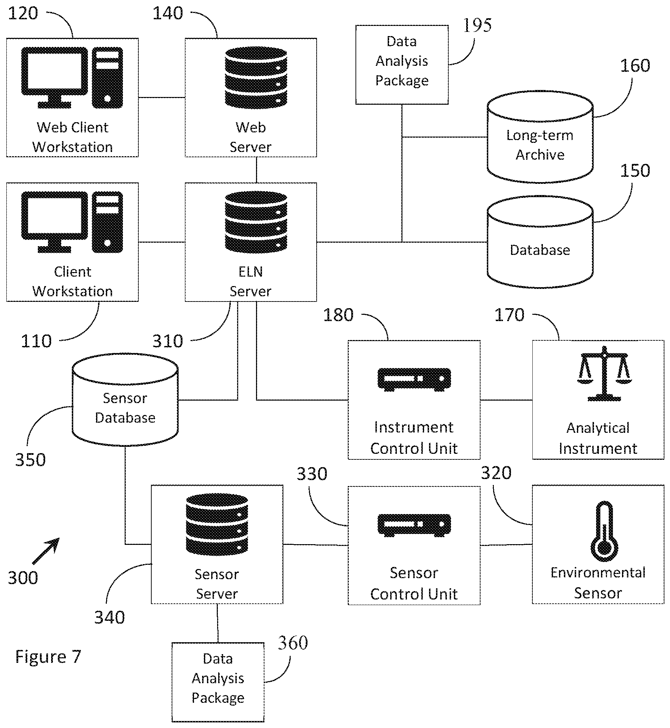

Figure 6 shows a different system topology 200, where one or more environmental sensors 190 are connected to the Application Server 130 optionally through one or more separate sensor control units 210. Figure 7 shows an alternative system topology 300, where an EDMS, here an ELN, is supported on an EDMS server, here ELN server 310 but there is a separate sensor network with one or more environmental sensors 320 optionally connected to one or more sensor control units 330 and a Sensor Server 340, with sensor data being stored on Sensor Database 350, to which ELN server 310 has access. The Sensor Server 340 may optionally also have one or more data analysis packages 350. Such a topology may be found for example when environmental sensing and the ELN are provided by separate services.

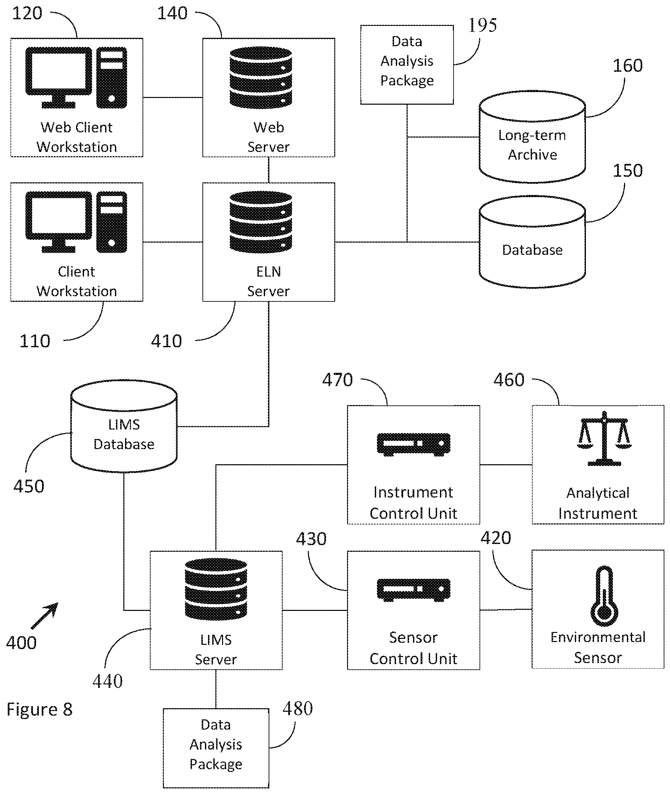

Figure 8 shows an alternative system topology 400, where the EDMS, here also an ELN, is supported on EDMS server, here ELN server 410 but there is a separate network of a full LIMS with one or more environmental sensors 420 optionally connected to one or more sensor control units 430 and a LIMS Server 440, to which is also connected one or more analytical instruments 460 optionally through an instrument control unit 470, and one or more data analysis packages 480, with sensor data being stored on LIMS Database 450, to which ELN server 310 has access. Such a topology may be found for example when environmental sensing and instrument data management are run by a LIMS service separate from the ELN service.

The various components of the example systems 100, 200, 300 and 400 described above (e.g. the client workstations 110, 120, the application server 130, the web server 140, and the database 150) are preferably completely separated to allow conformity with laboratory/company preferences, workloads, and infrastructure. This can be achieved by adhering to at least a 3-tier client-server architecture or preferably a web-based thin client. Any suitable device connected to the LAN (e.g. a client workstation or an instrument) should be able to interface via TCP/IP to the application server 130, provided the appropriate client software has been installed and configured thereon. Optionally, multiple application servers can be provided which allow for metadata replication. Preferably, the example systems 100, 200 and 300 allow the support of wireless environments, handheld and Tablet PCs, Offline Clients, access via voice-control and the like.

The architecture of the example systems 100, 200, 300 and 400 readily allow the connection of several such LANs all over the world. This is particularly advantageous for globally operating companies that run several research laboratories in different countries and/or continents. Accordingly, all data and related metadata are immediately globally available. Search functions are available for all servers simultaneously. It is possible for a user to access all electronic notebook pages on client hardware anywhere in the world. A support of corporate wide multi-site multi-server storage is, thus, also possible.

In accordance with the present invention, an EDMS (e.g. electronic laboratory notebook (ELN) system) includes an application server running an EDMS server application, a data storage system containing data in communication with the application server, and an environmental sensor unit in communication with the application server. The data comprise environmental data received from the environmental sensor unit.

In accordance with the present invention, the EDMS (e.g. ELN) further includes a process instrument, wherein the data storage system in the database or storage facility further comprises an aggregated data file comprising process measurement data received from the process instrument. The process instrument is not particularly limited and may be selected from the group consisting of any types of laboratory equipment and manufacturing facility equipment including robotic automation instruments.

The environmental data is stored in the aggregated data file as metadata, whereas other data can comprise data types selected from the group consisting of project data, experiment data, object data, user data, inventory data, maintenance data, usage data, and metadata

The environmental sensor unit is not particularly limited as long as the environmental sensor unit is configured to determine environmental data describing an environmental condition of the process instrument. In preferred embodiments the sensor unit is coupled with or in communication with a sensor control unit which either or both are programmed with logic or instructions to receive and/or transfer sensor data to the application service and/or data storage device. In preferred embodiments, the environmental sensor unit measures environmental data selected from the group consisting of temperature, humidity, light intensity, light wavelengths, vibration, gas concentration, air pressure, volatile organic compounds (VOC) concentration, particulate level, air pollution level, calibration information, user information, and equipment use information.

In preferred embodiments, the systems further include a client workstation running an EDMS (e.g. an ELN) client application in communication with the application server. The data received from the environmental sensor unit is environmental data relating to an environmental condition of the process instrument at or about the time measurement data is measured by the instrument and/or transferred to the application server. The environmental data received from the environmental sensor and the measurement data are stored in the data storage system. The environmental data is stored as metadata which characterizes the measurement data.

The process instrument is preferably controlled by a controlling computer or module programed with logic and/or instructions for such control. For example, a measurement instrument agent module can being run on the controlling computer, wherein the measurement instrument agent module is programmed with logic to transfer measurement data from the process instrument to the application server.

In additional embodiments, the EDMS (e.g. ELN or LIMS system) includes an instrument control unit and preferably an instrument interfacing module (IIM) programmed with logic and/or instructions for establishing a controlled flow of data between the analytical/ process instrument and/or the environmental sensor unit and to any or all of the ELN servers, LIMS servers, application servers, web servers, sensor servers, databases, and client work stations herein described.

In preferred embodiments the IIM is configured to be the instrument control units and/or sensor control units described herein with respect to Figs. 5 to 9. In other embodiments the IIM is a separate unit located in data communication between said instrument control units / sensor control unit and the respective servers, databases and client workstations noted above.

IIMs are well-known in the art and allow a user or technician to interface with above noted servers databases and/or work stations and process equipment (e.g. analytical measurement instruments etc.) to automate laboratory and/or manufacturing process workflows and data collection. IIMs and related hardware are typically configured with a user IO capabilities that are increasingly commonplace in consumer-grade mobile devices such as smart phones and tablets, such as a display, bar code or QR code scanner, RFID and/or NFC reader, speaker, microphone, non-contact gesture capabilities (such as those being developed by Google's Soli project and by Neteera), secure payment interfaces (such as the ability to accept Apple Pay, a credit card, or process other financial transactions), and camera etc. IIMs are configured to provide direct or indirect audible and/or visual instruction to a user/technician regarding process protocols and steps of a laboratory or manufacturing process to be undertaken. Examples of indirect instructions include sending instructions to a user's phone, mobile device, headphones, or AR/VR-enabled smart-glasses (for example, like the Vuzix Blade, Google Glass, or Microsoft HoloLens). For example, IIMs can provide instructions to a user/technician to undertake specific steps of a process and can receive and/or transfer data from the user/technician and data from process equipment (e.g. analytical and/or measurement instruments) to the application server, client workstations and database. Examples of IIMs and related hardware and software include those offered by Mettler Toledo under the LabX tradename.

In preferred embodiments of the present invention, an IIMs is further configured to interface with the environmental sensor unit of the present invention and/or with a sensor control unit to receive and/or transfer data therefrom to the above-noted application servers, work stations and databases. As explained in greater detail below, in additional preferred embodiments, the IIM is configured to display information and/or queries to a user regarding the environmental data received/transferred by the IIM. Furthermore, the IIM is preferably configured to receive and communicate audible/manual/visual/etc. responses directly or indirectly from the user/technician to the information/queries regarding said environmental data.

The EDMS (e.g. ELN) and further comprises a correlation module (e.g. optionally resident or coextensive with the data analysis packages 195 of Figs. 5-8) programmed with logic and instructions to determine if a correlation exists between environmental data stored as metadata in the aggregated data file and the specified operating ranges of the process instrument, wherein the correlation is whether or not environmental data stored as metadata in the aggregated data file is within the specified operating ranges of the process instrument. The correlation determination can be performed via statistical analysis and/or statistical comparison of the respective data. If a correlation is determined the correlation module is programmed with logic and instructions to prompt a user with a message warning the user that environmental data stored as metadata in the aggregated data file is not within the specified environmental operating ranges of the process equipment and a further message selected from the group consisting of: (i) a recommendation to modify process data; (ii) a recommendation to calculate a correction or offset factor for process data received from the process instrument; (iii) a recommendation to modify a result of the experimental or manufacturing process; (iv) a recommendation to abandon the experimental or manufacturing process; and (v) a recommendation to modify a process step, process run, or process protocol of the experimental or manufacturing process.

In the embodiments described herein, the present invention provides an EDMS (e.g. ELN system) containing process data received from the process instrument and environmental data received from an environmental sensor unit describing the environmental condition of the process instrument. In preferred embodiments, the environmental data describes the environmental condition of the process instrument at about the time of process data is obtained or before. In accordance with the present invention, the environmental data is saved as metadata in the aggregated data file with said process data.

In a preferred embodiment, the EDMS includes an application server running an EDMS server application; an environmental sensor unit in direct or indirect communication with the application server; as process instrument a laboratory/manufacturing/process instrument in direct or indirect communication with the application server; a data storage system in direct or indirect communication with the application server, wherein the data storage system comprises specified environmental operating ranges of the process instrument and an aggregated data file comprising process data received from the process instrument and environmental data received from the environmental sensor unit describing the environmental condition of the process instrument, wherein environmental data is stored in the aggregated data file as metadata which characterizes the environmental condition of the process instrument at the time the process data is received from the process instrument; and a correlation module programmed with instructions and logic to determine if a correlation exists between environmental data stored as metadata in the aggregated data file and the specified operating ranges of the process instrument. For example, the environmental operating ranges of the process instrument can be information derived from the manufacturer or specific protocol ranges determined by scientists and/or operators and input into the EDMS system.

To determine whether a correlation exists, data stored in the data storage system including the specified environmental operating ranges of the process instrument are compared with environmental data stored as metadata in the aggregated data file. The existence of a correlation can be determined if the compared value(s)/range are the identical, fall within a range, are different from, are fall outside of range of the comparing data set.

Upon determination of existence of a correlation, the correlation module is programmed with instructions and logic to prompt a user with a message warning the user that environmental data stored as metadata in the aggregated data file is not within the specified environmental operating ranges of the process equipment and a further message selected from the group consisting of: (i) a recommendation to modify process data and optionally how to modify process data; (ii) a recommendation to calculate a correction or offset factor for process data and optionally how to calculate the correction or offset factor for process data; (iii) a recommendation to modify a result and optionally how to modify the result; (iv) a recommendation to abandon a process, process run, or process protocol; and (v) a recommendation to modify a process step, process run, or process protocol and optionally how to modify the process step, process run, or process protocol.

A corresponding method of use of such an exemplary EDMS is likewise provided wherein the method includes the steps of (a) providing such an EDMS; (b) receiving process and environmental data in the application data server from the process instrument and the environmental sensor; (c) determining in the correlation module if a correlation exists between two or more of process data, environmental data, and specified environmental operating ranges of the process instrument; and (d) if it is determined in step (c) that a correlation exists, prompting the user/technician the aforementioned message (for example through the client workstations and/or through an IIM described above).

In an exemplary embodiment, a range of acceptable environmental operating conditions/variables (e.g. temperature, humidity, light level, gas concentration, air pressure, equipment use information etc.) for a process instrument (e.g. an electronic balance, a pipetting system, high throughput screen device, etc.) are stored within a data storage system of an EDMS. When a user/technician intends to use this specific instrument in a process step of a particular protocol, environmental data about the instrument (e.g. temperature, humidity, light level, gas concentration, air pressure, equipment use information at about the time of the measurement or before) is sensed by the environmental sensor and transferred to the application server (at about the time of use or before). The correlation module then compares (e.g. preferably by analytical and/or statistical methods) said environmental data about the instrument with the specified operating ranges of the process instrument to determine if a correlation exists. Here, the correlation could reveal whether the current environmental conditions surrounding the instrument fall within or fall outside the specified operating conditions of the instrument. If a correlation is determined to exist the correlation module then can prompt a user/technician (preferably through the application server) with said message (for example through the client workstations and/or through an IIM described above).

For example, where the current environmental conditions about the instrument are outside of the specified operating conditions of the instrument, the user can be prompted: with a recommendation such as to abandoned the current protocol OR to modify the protocol step, data or result (and optionally how to modify the protocol step, data or result); with a warning that a correlation exists optionally along with information about the correlation; and/or a query as to whether they want to proceed with the process step or wait until a later time; or any combination thereof. In preferred embodiments, where a recommendation is provided to the user/technician further instruction is provided to the user to actually perform the suggested recommendation and/or further instruction is provided to the user as to how to perform the suggested recommendation so as to address the correlation so that the process protocol can be directed back on a trajectory for successful completion of the process. Reference is made to the methods and apparatuses of earlier filed patent applications "Method and Apparatus for Process Optimization" which was filed on October 1, 2018 and received US Provisional Application Serial No. 62/739,441 and "Method and Apparatus for Process Optimization" which was filed on February 4, 2019 and received US Provisional Application Serial No. 62/800,900 and their related US and PCT applications (US 16/589,713 and PCT/US19/53977).

In additional embodiments, the environmental data is instrument use information. For example, information regarding the regarding the quality or accuracy of the instrument such as how many times the machine has been used since its last calibration etc. Whether numerous identical instruments can be used (such as scales or pipetting machines etc.) the correlation module can determine preferred instruments for use and send a corresponding message to a user with a recommendation of which instruments should be used etc.

***Environmental Sensor Data and Measurement Instrument Data Collection and Aggregation/Appending:***

In the embodiments herein described, the EDMS (e.g. ELN system) make use of computer infrastructure/-modules programmed with logic/instructions and having circuity comprised of hardware, software, memory, processors, data storage, computers, network connectivity, etc. which cause/create/effect operability of said systems and methods.

The present invention comprises the storage of environmental data as metadata in the aggregated data file of the data storage system and may comprise appending environmental measurements as metadata to instrument measurements. In the context of system architecture, there are many ways to append environmental data as metadata. Preferred examples of these include, for example:

- An instrument control unit such as 180 in System 100 of Figure 5, can collect data directly from Environmental sensor 190 and add it as metadata along with other measurement metadata
- An instrument Control Unit such as 180 in System 200 of Figure 6 can collect and aggregate data from

  - Sensor control unit 210
  - Application server 130
  - Database 150

- An Application server such as 130 in System 200 of Figure 6 can collect environmental data from optional sensor control unit 210 or directly from environmental sensor 190 and append it as metadata to measurement data and metadata from instrument control unit 180
- An EDMS (e.g. ELN system) server such as 310 in System 300 of Figure 7 can collect environmental data from sensor database 350 and append it as metadata to measurement data and metadata from instrument control unit 180
- A LIMS server such as 440 in System 400 of Figure 8 can collect environmental data from optional sensor control unit 430 or directly from environmental sensor 420 and append it as metadata to measurement data and metadata from instrument control unit 470
- Etc.

In the context of identifying environmental measurement from data streams of environmental sensors, the following are commonly useful:

◦ Time point of measurement; appropriate for simple instrument measurements like balance weights

◦ Time point immediately before disturbance prior to measurement; appropriate for e.g. storage conditions of substances

◦ Two time points of measurements: one at start of measurement, one at end. In this case, duration data (i.e. difference between start time and end time) is also valuable metadata.

◦ Statistical summary across duration of measurement (mean, stdev)

Several different environmental factors can be measured using the various embodiments described herein. The word 'Environment' can be for example: the area where an instrument (lab or manufacturing equipment where measurement or other related data is obtained from); a laboratory or part of a laboratory space, a cold room, an animal house, a manufacturing floor, a greenhouse, a weather station; the area surrounding a chemical or ingredient being measured, or involved in the preparation of samples being measured, such as a reagent bottle (as measured by a miniaturized sensor or array of sensors, a 'smart lid' etc.), any storage container (grain silo, fermentation tank, refrigerator, freezer, etc.).

The environmental factors (e.g. measured environmental parameters) can be, for example any of the following: temperature, humidity, atmospheric pressure, gas composition (overall, or specific to certain components of interest such as Volatile Organic Compounds (VOCs), ammonia, carbon monoxide, carbon dioxide, oxygen, or any other molecule for which sensors are available) light intensity (overall, or specific to a window of wavelengths - red, green, blue, or otherwise filtered to be sensitive only to a range of frequencies useful to the application, such as blue-UV for light-sensitive chemistry, or near infra-red, red and blue for plant growth) sound intensity (overall, or specific to a window of frequencies), motion, changes in magnetic strength or orientation etc.

Another environment factor related to the instrument measurement data that can be measured by environmental sensing units is "whom took the measurement" and/or the "Time of measurement" from the laboratory/manufacturing facility equipment or "duration of a process step". Such a measured factor can give a measure of the environment representative of conditions such as when using the instrument and/or inside a reagent container immediately before use. Further such a measured factor can give duration data (i.e. difference between times of measurements of other process steps) and this can also be determined from measured and recorded time points. This factor can be determined by any known methods of determining time or duration of time. In the alternative this factor can be determined by: a change of state in measuring equipment (e.g. change in weight recorded by a balance, motion detected by motion sensor (such as an accelerometer, gyroscope, software-based gyroscope) fitted to portable equipment or reagent containers etc.). In the alternative it simply can be determined and input by the operator of the equipment.

The choice of what environmental factor(s) to measure can be guided by relevance to the measurement (known or suspected by instrument manufacturer, research and supervisory staff) and availability of sensors (both commercially and the subset installed by an institution). The location of sensors needs to be adequate to represent the local environment but this may not mean close spatially; for example, atmospheric pressure across an entire floor of a building may be equal if there are no positive-pressure areas like clean rooms or negative-pressure areas like biohazard containment areas, and so an atmospheric pressure sensor somewhere on that floor can often be used to supply environmental pressure data relevant to the entire floor. In contrast, storage humidity may require a far more local sensor within a reagent container. Handling humidity may be recorded by a nearby humidity environmental sensor, but if there are no sources of water vapour addition (humidifiers, hot water baths etc.) or extraction (dehumidifiers, areas of water condensation) a more remote humidity sensor can be used; however, relative humidity varies with temperature and so corrections may be needed for temperature differences, using dew point or water vapour pressure as a constant point for correction.

US Prov. Application entitled "Method and Apparatus for Local Sensing" which was filed on October 1, 2018 and received US Provisional Application Serial No. 62/739,419 and PCT Application Serial No. PCT/US19/54020 filed on October 1, 2019 describe a label/tag sensor package comprising a plurality of sensors configured on a small flexible backing for local sensing applications. This smart label sensor package can be placed on laboratory/manufacturing equipment, storage containers, and even on products and/or packaging as the product is produced, stored and/or shipped. This sensor package can measure/determine many of the environmental factors of interest and described herein and can wirelessly communicate this data to an application server for aggregating with measurement data received from process instruments in the methods herein described. Furthermore, due to the size and relatively low cost of these sensor packages, they can be placed at many different locations (e.g. such as on tools and instruments) within a facility and measure local environmental conditions with ease, etc.

***Methods of use of a file hierarchy containing environmental data and instrument data (e.g. environmental data saved as metadata):***

The present invention may be used in a method of using the ELNs described herein which have environmental data aggregated with and/or appended to (preferably as metadata) equipment/instrument measurement data.

In one embodiment simply having access to environmental data is of extreme benefit to users. In other words, having access to environmental data on a client workstation and/or web client workstation allows for higher visibility of the process and its results. It allows for inspection by researchers in an EDMS (e.g. ELN system), where the EDMS (e.g. ELN system) supports display of metadata by hovering over the measurement. While this gives only on-screen, visual access to the environmental conditions, it allows researchers (or data analysis packages 195 of Figs. 4-8, etc.) to do rapid screening of possible correlations between measurements, outcomes and environmental factors or validation that protocols were executed within specified limits. Such screening and validation activities of environmental conditions will therefore be executed more quickly and efficiently when environmental data is aggregated with and/or other stored with measurement data as for example metadata.

Having access to environmental data on a client work station and/or web client work station also facilitates data analysis by researchers, where metadata is downloaded with requested data in a format suitable for use in spreadsheets (.csv .txt, proprietary e.g..xlsx .gsheet etc.). This allows researchers to work with data on their preferred platform to search for correlations; optionally, evidence of such correlations can then be posted in the ELN. For example, correlations may be linear or non-linear trends in data; and/or identification of specific conditions or combinations of conditions that lead to unfavorable outcomes.

Having access to environmental data coupled with equipment/instrument measurement data from the process also allows for improved automated analysis. Figures 5 to 8 show example system architectures that can support the invention; in all of these, optional data analysis modules/packages (programmed with data analysis logic and/or instructions) are shown (195, 360, 480) as part of the architecture. There are many configurations of systems that allow data to be analyzed by such packages or equivalent and there are many ways in which data can be analyzed, but an example form is correlative analytics, where data is searched to identify measurements of one or more parameters that correlate with measurements of other parameters. Correlation is often identified by statistical testing, but when a correlation search is used as a blind tool across a family of data sets, statisticians recognize its power is diminished because of the need to avoid increasing the likelihood of false discoveries; this topic is the 'Familywise Error Rate' (FWER) and approaches to manage its impact include the Bonferroni procedure, The Šidák procedure (see "Rectangular Confidence Regions for the Means of Multivariate Normal Distributions" by Z. K. Šidák, Journal of the American Statistical Association 1967 Vol 62 pp 626-633) and more recent approaches such as that described in 'Controlling the False Discovery Rate: a Practical and Powerful Approach to Multiple Testing' by Y Benjamini and Y Hochberg J. Royal Statistical Soc. B 1995 Vol 57 pp 289-300. It is therefore preferable to limit correlation searches to small families of relevant data sets where possible, rather than an entire database, to avoid diluting their power. A simple way to do this is to limit the family of data sets to those that are closely related; metadata is therefore a valuable resource for correlation searches, and inclusion of environmental data in the metadata is justified by the examples where it has been found previously to be a factor in experiment outcomes.

US Provisional Applications both of which are entitled "Method and Apparatus for Process Optimization" which were filed on October 1, 2018 and February 4, 2019 and which received US Provisional Application Serial Nos. 62/739,441 and 62/800,900 and their related US and PCT applications (US 16/589,713 and PCT/US19/53977), describe methods for determining whether processes are on a trajectory for successful completion by observing and/or correlating environmental data observed/measured in a current run with environmental data observed/measured during previous runs of the process. If it is determined that the process is not of a trajectory for success the process may be abandoned, or the protocol may be altered such that the given run is put back on a course/trajectory for successful completion. Logic and/or instructions for such analysis of data may be incorporated into the data analysis packages herein described.

In another embodiment, analysis of a file system containing environmental condition data can also facilitate equipment maintenance and/or determining maintenance schedules in the laboratory and/or manufacturing facility. Logic and/or instructions for such analysis of data may be incorporated into the data analysis packages herein described. The following scenario is exemplary of this embodiment:

◦ An example piece of equipment is a freezer, which may be fitted with a switch to detect door-opening events. Example devices for detecting door-opening events include a latching switch (US3,996,434); a magnetic switch (US4,241,337); a capacitive sensing switch (US4,691,195); and a light-detecting indicator coupled to a fridge or freezer light.

◦ An example maintenance cycle is a freezer defrosting cycle and, since frosting up of freezer is caused by condensation of water vapour from warm, moist air that enters the freezer, principally when the door is opened, timing of the freezer defrosting cycle can be improved by considering door opening events. Prior art in US4,463,348 discloses that freezer defrosting can be tied to a simple cumulative time the door is detected to be open.

◦ Freezer maintenance can be refined beyond what is possible using simple time data for freezer door-opening events, since simple time data will only indicate how much air exchange may occur but not how much moisture that air carries and hence how much frost may form in the freezer. However, if the humidity of the environment outside the freezer is measured and appended to the time data, it can be considered by an algorithm that predicts when a freezer may be losing efficiency due to accumulated frost to improve prediction of when the next defrost cycle is due.
◦ Other equipment where exposure to moisture during use is a concern will also benefit from a maintenance schedule that can be tailored by a scheduler with ready access to humidity data associated with use.

As described herein analysis of a file system having environmental condition data and instrument measurement data can be used to identify correlations between these different data sets. Furthermore, the present invention may be used in methods using these identified correlations to improve the underlying process such as in estimating, calculating or otherwise determining alternative/improved results and/or correction factors for altering or improving instrument measurements. In some embodiments modifications are made to the measurement data, to the actual process protocol, or to the results achieved by the process. The following scenarios are exemplary of these concepts and use of identified correlations between environmental conditions and instrument measurements.

- Where a correlation between a measurement and environmental conditions has been established, it becomes possible to use this correlation to enhance the metadata.

    ◦ For example, for the Tecan Freedom EVO pipetting robot used in Figure 3, fitted with a 200 $\mu$L tip and set to dispense 25 $\mu$L, a correlation between evaporation potential and %offset from specified dispense volume has been identified as illustrated in Figure 9. Once this correlation is known, it can be used to estimate a %offset, calculated from the environmental conditions. For a particular measurement of 25 $\mu$L, when the relative humidity is measured to be 10%RH and the temperature is 25 °C, such as is common in a heated New England laboratory during winter, the Evaporation Potential is 27.97 hPa (with an intermediate calculation of Psat = 31.084 hPa); as an input to the trend shown in Figure 9, this gives an offset of -2.25% in dispensed volume. Under the conditions of a New England summer, where laboratory humidity can increase to e.g. 50% but lab temperature is maintained at 25 °C (so that again Psat = 31.084 hPa), the evaporation potential will fall to 15.54 hPa and the offset becomes +1.26%. The metadata for a dispense can be enhanced considerably by inclusion of the estimated offset, and the intermediate calculations of Psat and Evaporation potential can potentially also be included.
    ◦ Another example is for weighing caffeine hydrate, which is recognized to dehydrate when handled below 30% RH, as illustrated in Figure 4. This can be rearranged to determine the %increase in caffeine content, as shown in Figure 10. This shows that at humidities below 30%RH, there is a marked increase in caffeine content in the weighed amount, which can be estimated to be +7.5%. This new rule can be applied in estimating the effect of room-temperature humidity on weighing caffeine hydrate; for laboratory conditions of 10%RH and 25 °C, such as is common in a heated New England laboratory during winter, the caffeine hydrate will dehydrate, resulting in an estimated offset of +7.5%, while in a New England summer at 50% the offset in weight can be estimated as 0%. The rule can be adapted to improve estimates, e.g. by spline fitting or curve fitting the data, without changing the underlying method.

- in a further embodiment an estimated actual measurement is provided:

    ◦ Extending the previous examples of the Tecan Freedom EVO pipetting robot fitted with a 200 $\mu$L tip and set to dispense 25 $\mu$L, when the relative humidity is measured to be 10%RH and the temperature is 25 °C, such as is common in a heated New England laboratory during winter, the offset has been estimated to be -2.25%, so an estimate of actual dispensed volume of 23.4375 uL can be added to the metadata. Under the conditions of a New England summer, where laboratory humidity can increase to e.g. 50% but lab temperature is maintained at 25 °C, the offset has been estimated to be +1.26%, so an estimate of actual dispensed volume of 25.315 uL can be added to the metadata.
    ◦ Another example concerns distillations of liquids. In a laboratory set-up where a liquid is distilled, a temperature probe measuring the temperature of the vapor above the boiling liquid can replace the usual glass thermometer to become the analytical instrument 170 of Figures 5, 6, or 7 or 460 of Figure 8. The instrument control unit 180 or 470 performs the function of identifying plateaus in the vapor temperature to generate boiling points. An example set-up is illustrated in Figure 11 although chemists ordinarily skilled in the art will recognize that apparatus for distillation can be set up in many different ways. Figure 11 shows a distilling flask 1010 connected to a three-way adaptor 1020 equipped with a temperature probe 1030 and connected to a condenser 1040 with water inlet 1042 and water outlet 1044, connected to receiving flask 1060 via connector 1050. A heat source 1060 for supplying heat to the contents of distilling flask 1010 is also supplied, as is an analytical instrument 1070 for collecting and analyzing data from the temperature probe 1030. This connection is illustrated as a physical cable, but in other embodiments can also be wirelessly connected.

        Environmental data that includes atmospheric pressure can be collected by an environmental sensor 190 of Figures 5 or 6, 320 of Figure 7, or 420 of Figure 8; atmospheric pressure data can in one embodiment be incorporated into the metadata. In another embodiment, repeats of the same distillation procedure can generate a set of distillation temperatures and pressures, which can be fitted by an appropriate model such as the Clausius-Clapeyron equation:

$$\ln\left(\frac{P_1}{P_2}\right) = \frac{\Delta H_{vap}}{R}\left(\frac{1}{T_2} - \frac{1}{T_1}\right)$$

In a further embodiment, Trouton's rule, $\Delta S_{vap} \approx 10.5R$, can be used to fix the intercept implied by the Clausius Clapeyron equation:

$$\ln\frac{P}{P^{\ominus}} = -\frac{\Delta G}{RT} = \frac{\Delta S_{vap}}{R} - \frac{\Delta H_{vap}}{RT} \approx 10.5 - \frac{\Delta H_{vap}}{RT}$$

Note that during a distillation, the pressure of the distillate will equal atmospheric pressure, P, at the distillation plateau temperature T; since standard pressure, $P^{\ominus}$, is known (1013.25 hPa), this allows estimates of the enthalpy of evaporation $\Delta H_{vap}$ to be made from a single distillation and then used to determine a distillation temperature at another pressure, such as at standard atmospheric pressure. Either or both can be usefully incorporated into the metadata.

  ▪ This illustrates that modelling correlations between measurements and environmental conditions does not need to be based solely on empirical fitting of data; it can also fit data to known relationships to generate other metadata.

• In another embodiment a specified measurement is changed in response to the environmental conditions in anticipation that the actual measurement will fall closer to a desired measurement than it would if no response were made for environmental conditions.

  ○ The utility of this embodiment is best realized in a pre-defined procedure. As noted in the Background section, an EDMS (e.g. ELN system) can provide both a flexible platform to support research work and more structured interfaces tailored to particular tasks, and it is the more structured interface that is used to support record keeping for pre-defined procedures.
  ○ Predefined procedures may or may not have an existing body of data supporting choice of steps. Therefore, relationships between environmental conditions and specific steps of the protocol, such as the impact of humidity on weighing of substances, the impact of temperature and humidity on pipetting of volumes, the impact of atmospheric pressure on distilling etc., may or may not already have been elucidated or may have been estimated from limited data and application of known relationships, insight and/or experience. Any of these types of recognized relationships can be applied in this embodiment and any can be improved or replaced in light of further evidence.

    ▪ Definition of relationships and/or improvement of recognized relationships can be made at the time of establishing a protocol or any time thereafter. Modifications to an existing protocol in light of newly established or improved definitions may be made manually, may be managed through a quality system with review of evidence and sign-off, or may be made automatically if a correlation identified by an automated analysis package reaches a predefined level of confidence.

  ○ A specified measurement may be changed in response to altered environmental conditions in a variety of ways:

    ▪ The determined relationship may be applied to environmental conditions that lie within the range of those previously experienced (i.e. interpolation) as well as conditions beyond those already experienced (i.e. extrapolation)
    ▪ A limit of environmental conditions may be applied so that change is only made under interpolation conditions. Where extrapolation would be required, it is possible to specify no adjustment, or to apply an adjustment no more extreme than one already justified by the limit of known environmental conditions, or some other change to an extrapolation that allows the protocol designer to apply a degree of caution.
    ▪ A protocol may be changed in response to environmental conditions by abandoning the protocol where it is recognized that the conditions will not allow for success in executing the protocol. Examples of this condition include a humidity too high for a preparation to be dried successfully or too low for tissue samples to be handled without damage, a temperature too cold for equipment to operate successfully (such as compromised O-rings, lubricants being too viscous, reagents having frozen etc.) or too warm for success (excessive evaporation of solvents, enzyme denaturing, a light level too damaging for photosensitive components or too dim for necessary photocatalysis, vibration levels too high for successful use of an analytical balance etc.

∘ A protocol may be modified through relationships between environmental data and measurements that have been identified by analysis of metadata; optionally, protocols may also be modified by analysis of measurement data and environmental data not associated in a measurement-metadata relationship, such as data stored in different file locations in disk storage, or on different disks, or in different databases, or in different data management systems.

∘ An example of changing a specified measurement in response to altered conditions Is given in the context of operating the Tecan Freedom EVO pipetting robot fitted with a 200 μL tip and specified to dispense 25 μL, this specification having be made when operating at 25 °C and 35.7%RH (i.e. an Evaporation potential of 19.99 hPa, where no offset is found between specified volumes and actual dispensed volumes). When the protocol calls for a step to do this, but querying the environmental sensor identifies the humidity to have fallen to 10%RH (while temperature is stable at 25 °C), the dispenser is recognized in the examples above to have an offset of -2.25% in dispensed volume, dispensing only 23.4375 uL. In this case, the protocol updates in response to the environmental sensor readings to specify a volume to dispense of 25.575 uL, because the best estimate of actual dispense volume, after considering the impact of the lower humidity, will be the desired 25.0 uL

∘ Another example of changing a specified measurement in response to altered conditions is given in the context of transferring a distillation protocol from a lab in Boston to a partner one in Denver. Such sharing of protocols can follow the teaching of e.g. US patent 9,842,151. For a protocol defining synthesis of trimethyl(phenoxy)silane from iodotrimethylsilane, where product and starting material are separated by distillation. In the Boston lab, a first fraction is collected at 106-109 °C (environmental metadata: P = 1014.7 hPa, estimated $\Delta H_{vap}$ = 33.2 kJmol$^{-1}$, determined as described in a previous example) and a second fraction is collected at 119-120°C (environmental metadata: P = 1014.7 hPa, estimated $\Delta H_{vap}$ = 34.3 kJmol$^{-1}$), the first fraction being unreacted iodotrimethylsilane and the second fraction being the desired product trimethyl(phenoxy)silane. Transfer of these fraction temperatures and associated metadata in a protocol to the Denver lab then means the protocol functioning according to the invention, specifically here applying a pressure correction to the boiling points, has the necessary information in the metadata to update specification for the product boiling range in the protocol. If, for example, the laboratory pressure at time of distillation is measured to be 830 hPa, a first fraction distilling at 98.9 - 101.8 °C can be identified as unreacted starting material and a second fraction distilling at 111.6 - 112.6 °C can be identified as product. This uses a rearrangement of equation used to generate values for $\Delta H_{vap}$, specifically:

$$T = \frac{\Delta H_{vap}}{R\left(10.5 - \ln\frac{P}{P^{\ominus}}\right)}$$

Changing the specified temperature range reacts to the difference in atmospheric pressure caused by difference in altitude of the two labs, and prevents technical staff running the protocol from mis-identifying the desired product as unreacted starting material.

*Methods of Using an Empirical data management system (EDMS):*

The present invention also provides a method for using an EDMS including the steps of: (a) providing any type of EDMS system as described herein; (b) receiving data in the application data server, wherein the data is received from the process instrument and from the environmental sensor unit; (c) determining in the correlation module if a correlation exists between two or more of process data, environmental data, and specified environmental operating ranges of the process instrument, and (d) if it is determined in step (c) that a correlation exists, prompting a user with a message warning the user that the environmental data stored as metadata in the aggregated data file is not within the specified environmental operating ranges of the process equipment and a further message selected from the group consisting of: (i) a recommendation to modify process data; (ii) a recommendation to calculate a correction or offset factor for process data; (iii) a recommendation to modify a result; (iv) a recommendation to abandon the experimental or manufacturing process; and (v) a recommendation to modify a process step, process run, or process protocol in the experimental or manufacturing process.

Unless the context is specifically limiting the terms analytical instrument, measurement instrument, laboratory instrument, process instrument, manufacturing instrument, analytical equipment, measurement equipment, laboratory equipment, process equipment, manufacturing equipment, testing instrument/equipment, medical instrument/equipment, and facility management instrument/equipment, etc. are used interchangeably herein. These instruments and equipment are well known in the art and are not particularly limited herein.

This application is also related to US Prov. Applications entitled (1) "Method and Apparatus for Local Sensing" which was filed on October 1, 2018 and received US Provisional Application Serial No. 62/739,419 and its related PCT application Ser. No. PCT/US19/54020; (2) "Method and Apparatus for Process Optimization" which was filed on October 1, 2018 and received US Provisional Application Serial No. 62/739,441 and "Method and Apparatus for Process Optimization" which was filed on February 4, 2019 and received US Provisional Application Serial No. 62/800,900 and their related US and PCT applications (US 16/589,713 and PCT/US19/53977).

The following references are also referred to in this application: US 20070208800 A1; US 6,725,232; US 7,250,950; US 7,555,492; US 8,548,950; US 8,984,083; US 9,489,485; US 9,842,151; US 9,954,976; 'Creating Context for the Experiment Record. User-Defined Metadata: Investigations into Metadata Usage in the LabTrove ELN' by C. Willoughby, C. L. Bird, S. J. Coles and J. G. Frey in the Journal of Chemical Information and Modeling, 2014, Vol 54 pp3268 - 3283.; http://www.artel-usa.com/resource-library/does-weather-affect-pipetting-yes/; 'Identification of Phase Boundaries in Anhydrate/Hydrate Systems' J. F. Krzyzaniak G. R. Williams, N. Ni J. Pharma. Sci., 2007 Vol 96, pp1270-1281.; "Rectangular Confidence Regions for the Means of Multivariate Normal Distributions" by Z. K. Šidák, Journal of the American Statistical Association 1967 Vol 62 pp 626-633; 'Controlling the False Discovery Rate: a Practical and Powerful Approach to Multiple Testing' by Y Benjamini and Y Hochberg J. Royal Statistical Soc. B 1995 Vol 57 pp 289-300.

Reference throughout the specification to "one embodiment," "another embodiment," "an embodiment," "some embodiments," and so forth, means that a particular element (e.g., feature, structure, property, and/or characteristic) described in connection with the embodiment is included in at least one embodiment described herein, and may or may not be present in other embodiments. In addition, it is to be understood that the described element(s) may be combined in any suitable manner in the various embodiments.

Numerical values in the specification and claims of this application reflect average values for a composition. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

**Claims**

1. An empirical data management system (EDMS) (100, 200, 300, 400) such as an Electronic Laboratory Notebook (ELN) system or a Laboratory Information Management System (LIMS), said EDMS (100, 200, 300, 400) comprising:

an application server (130) running an EDMS server application;
a process instrument in communication with the application server (130), wherein the process instrument is configured to determine process data from an experimental or manufacturing process;
an environmental sensor unit (190, 210) in communication with the application server (130),
wherein the environmental sensor unit (190, 210) is configured to determine environmental data describing an environmental condition of the process instrument;
a data storage system in communication with the application server (130), wherein the data storage system comprises specified environmental operating ranges of the process instrument and an aggregated data file comprising process data received from the process instrument and environmental data received from the environmental sensor unit (190, 210) describing the environmental condition of the process instrument, wherein environmental data is stored in the aggregated data file as metadata which characterizes the environmental condition of the process instrument at the time the process data is received from the process instrument; and
a correlation module programmed with instructions and logic to compare data stored in the data storage system including the specified environmental operating ranges of the process instrument and environmental data stored as metadata in the aggregated data file to determine if a correlation exists between environmental data stored as metadata in the aggregated data file and the specified operating ranges of the process instrument, wherein the correlation is whether or not environmental data stored as metadata in the aggregated data file is within the specified operating ranges of the process instrument, wherein upon determination of existence of the correlation, the correlation module is programmed with instructions and logic to prompt a user with a message warning the user that environmental data stored as metadata in the aggregated data file is not within the specified environmental operating ranges of the process equipment and a further message selected from the group consisting of:

(i) a recommendation to modify process data; (ii) a recommendation to calculate a correction or offset factor for process data received from the process instrument; (iii) a recommendation to modify a result of the experimental or manufacturing process; (iv) a recommendation to abandon the experimental or manufacturing process; and (v) a recommendation to modify a process step, process run, or process protocol of the experimental or manufacturing process.

2. The EDMS (100, 200, 300, 400) of claim 1, wherein the EDMS system (100, 200, 300, 400) further comprises an instrument control unit (180) in communication with the environmental sensor unit (190, 210) and/or the process instrument and the application server (130), wherein the instrument control unit (180) comprises hardware, instructions, and logic to receive the message received from the correlation module and to provide the message to the user, and

optionally wherein the instrument control unit (180) is an instrument interface unit (IIU) programmed with instructions and logic for establishing a controlled process workflow by a user and for establishing a controlled flow of data between the application server (130) and the process instrument and/or the environmental sensor unit (190, 210), for example wherein the IIU comprises one or more pieces of hardware selected from the group consisting of: a display, bar code scanner, RFID scanner, NFC reader, QR code scanner, speaker, microphone, non-contact gesture sensor, secure payment interface, and camera, for example wherein the one or more pieces of hardware are configured to receive data input by the user.

3. The EDMS (100, 200, 300, 400) of claims 1 or 2, wherein the specified environmental operating ranges of the process instrument include ranges of environmental variables selected from the group consisting of: temperature, humidity, light intensity, light wavelengths, vibration, gas concentration, air pressure, volatile organic compounds (VOC) concentration, particulate level, air pollution level, calibration information, user information, and equipment use information, and

optionally wherein the data stored in the storage system further comprises data types selected from the group consisting of project data, experiment data, object data, user data, inventory data, maintenance data and usage data.

4. The EDMS (100, 200, 300, 400) of any of claims 1 to 3, wherein the process instrument is selected from the group consisting of: laboratory equipment, manufacturing equipment, testing equipment, medical equipment, and facility management equipment and wherein the correlation determination is performed by statistical analysis and/or statistical comparison of two or more of process data, environmental data, and specified environmental operating ranges of the process instrument.

5. The EDMS (100, 200, 300, 400) of any of claims 1 to 4, further comprising a client workstation (110) running an EDMS client application in communication with the application server (130), wherein upon determination of existence of the correlation, the correlation module is programmed with instructions and logic to prompt a user using the client workstation (110) with the message.

6. The EDMS (100, 200, 300, 400) of any of claims 1 to 5, wherein the correlation module message recommendation options (i-v) further comprises an instruction to perform the recommended action and/or an instruction on how to perform the recommended action.

7. A method for using an empirical data management system (EDMS) (100, 200, 300, 400) of any of claims 1 to 6, comprising the steps of:

(a) providing an EDMS (100, 200, 300, 400) of any of claims claim 1 to 5;
(b) receiving data in the application data server (130), wherein the data is received from the process instrument and from the environmental sensor unit (190, 210);
(c) determining in the correlation module if a correlation exists between two or more of process data, environmental data, and specified environmental operating ranges of the process instrument, and
(d) if it is determined in step (c) that a correlation exists, prompting a user with a message warning the user that the environmental data stored as metadata in the aggregated data file is not within the specified environmental operating ranges of the process equipment and a further message selected from the group consisting of: (i) a recommendation to modify process data; (ii) a recommendation to calculate a correction or offset factor for process data; (iii) a recommendation to modify a result; (iv) a recommendation to abandon the experimental or manufacturing process; and (v) a recommendation to modify a process step, process run, or process protocol in the experimental or manufacturing process.

**Patentansprüche**

1. Empirisches Datenmanagementsystem (EDMS) (100, 200, 300, 400), wie etwa ein Elektronisches-Laborbuch-(ELN-)System oder ein Labor-Informations-Management-System (LIMS), wobei das EDMS (100, 200, 300, 400) umfasst:

   einen Anwendungsserver (130), der eine EDMS-Serveranwendung ausführt;
   ein Prozessinstrument, das mit dem Anwendungsserver (130) kommuniziert, wobei das Prozessinstrument so konfiguriert ist, dass es Prozessdaten aus einem Versuchs- oder Herstellungsprozess bestimmt;
   eine Umgebungssensoreinheit (190, 210), die mit dem Anwendungsserver (130) kommuniziert, wobei die Umgebungssensoreinheit (190, 210) so konfiguriert ist, dass sie Umgebungsdaten bestimmt, die einen Umgebungszustand des Prozessinstruments beschreiben;
   ein Datenspeichersystem, das mit dem Anwendungsserver (130) kommuniziert, wobei das Datenspeichersystem spezifizierte Umgebungsbetriebsbereiche des Prozessinstruments und eine aggregierte Datendatei umfasst, die von dem Prozessinstrument empfangene Prozessdaten und von der Umgebungssensoreinheit (190, 210) empfangene Umgebungsdaten zur Beschreibung des Umgebungszustands des Prozessinstruments umfasst, wobei Umgebungsdaten in der aggregierten Datendatei als Metadaten gespeichert sind, die den Umgebungszustand des Prozessinstruments zu dem Zeitpunkt charakterisieren, zu dem die Prozessdaten von dem Prozessinstrument empfangen werden; und
   ein Korrelationsmodul, das mit Anweisungen und Logik programmiert ist, um die in dem Datenspeichersystem gespeicherten Daten, einschließlich der spezifizierten Umgebungsbetriebsbereiche des Prozessinstruments, und die als Metadaten in der aggregierten Datendatei gespeicherten Umgebungsdaten zu vergleichen, um zu bestimmen, ob eine Korrelation zwischen den als Metadaten in der aggregierten Datendatei gespeicherten Umgebungsdaten und den spezifizierten Betriebsbereichen des Prozessinstruments vorliegt,
   wobei sich die Korrelation darauf bezieht, ob die als Metadaten in der aggregierten Datendatei gespeicherten Umgebungsdaten innerhalb der festgelegten Betriebsbereiche des Prozessinstruments liegen oder nicht, wobei bei Bestimmung des Vorliegens der Korrelation das Korrelationsmodul mit Anweisungen und Logik programmiert ist, um einen Benutzer durch eine Nachricht zu informieren, die den Benutzer warnt, dass die als Metadaten in der aggregierten Datendatei gespeicherten Umgebungsdaten nicht innerhalb der spezifizierten Umgebungsbetriebsbereiche der Prozessausrüstung liegen, und durch eine weitere Nachricht zu informieren, die ausgewählt ist aus der Gruppe bestehend aus:

   (i) einer Empfehlung zur Modifizierung der Prozessdaten; (ii) einer Empfehlung zur Berechnung eines Korrektur- oder Offset-Faktors für die von dem Prozessinstrument empfangenen Prozessdaten; (iii) einer Empfehlung zur Modifizierung eines Ergebnisses des Versuchs- oder Herstellungsprozesses; (iv) einer Empfehlung, den Versuchs- oder Herstellungsprozess abzubrechen; und (v) einer Empfehlung zur Modifizierung eines Prozessschrittes, eines Prozessablaufs oder eines Prozessprotokolls des Versuchs- oder Herstellungsprozesses.

2. EDMS (100, 200, 300, 400) nach Anspruch 1, wobei das EDMS-System (100, 200, 300, 400) weiterhin eine Instrumentensteuereinheit (180) umfasst, die mit der Umgebungssensoreinheit (190, 210) und/oder dem Prozessinstrument und dem Anwendungsserver (130) kommuniziert, wobei die Instrumentensteuereinheit (180) Hardware, Anweisungen und Logik umfasst, um die von dem Korrelationsmodul empfangene Nachricht zu empfangen und die Nachricht dem Benutzer bereitzustellen, und
   wobei optional die Instrumentensteuereinheit (180) eine Instrumentenschnittstelleneinheit (IIU) ist, die mit Anweisungen und Logik programmiert ist, um einen gesteuerten Prozessablauf durch einen Benutzer einzurichten und einen gesteuerten Datenfluss zwischen dem Anwendungsserver (130) und dem Prozessinstrument und/oder der Umgebungssensoreinheit (190, 210) einzurichten, wobei zum Beispiel die IIU ein oder mehrere Hardwarekomponenten umfasst, die ausgewählt sind aus der Gruppe bestehend aus: einer Anzeige, einem Barcode-Scanner, einem RFID-Scanner, einem NFC-Lesegerät, einem QR-Code-Scanner, einem Lautsprecher, einem Mikrofon, einem berührungslosen Gestensensor, einer sicheren Zahlungsschnittstelle und einer Kamera, wobei zum Beispiel die ein oder mehreren Hardwarekomponenten so konfiguriert sind, dass sie von dem Benutzer eingegebene Daten empfangen.

3. EDMS (100, 200, 300, 400) nach Anspruch 1 oder 2, wobei die spezifizierten Umgebungsbetriebsbereiche des Prozessinstruments Bereiche von Umgebungsvariablen umfassen, die ausgewählt sind aus der Gruppe bestehend aus: Temperatur, Luftfeuchtigkeit, Lichtintensität, Lichtwellenlängen, Vibration, Gaskonzentration, Luftdruck, Konzentration flüchtiger organischer Verbindungen (VOC), Partikelgehalt, Luftverschmutzungsgrad, Kalibrierungsinformationen, Benutzerinformationen und Informationen zur Gerätenutzung, und
wobei optional die in dem Speichersystem gespeicherten Daten weiterhin Datentypen umfassen, die aus der Gruppe bestehend aus Projektdaten, Versuchsdaten, Objektdaten, Benutzerdaten, Bestandsdaten, Wartungsdaten und Nutzungsdaten ausgewählt sind.

4. EDMS (100, 200, 300, 400) nach einem der Ansprüche 1 bis 3, wobei das Prozessinstrument ausgewählt ist aus der Gruppe bestehend aus:
Laborausrüstung, Herstellungsausrüstung, Prüfausrüstung, medizinischer Ausrüstung und Facility-Management-Ausrüstung, und wobei die Korrelationsbestimmung durch statistische Analyse und/oder statistischen Vergleich von zwei oder mehr Prozessdaten, Umgebungsdaten und spezifizierten Umgebungsbetriebsbereichen des Prozessinstruments durchgeführt wird.

5. EDMS (100, 200, 300, 400) nach einem der Ansprüche 1 bis 4, ferner umfassend eine Client-Workstation (110), die eine EDMS-Client-Anwendung in Kommunikation mit dem Anwendungsserver (130) ausführt, wobei bei der Bestimmung des Vorliegens der Korrelation das Korrelationsmodul mit Anweisungen und Logik so programmiert ist, dass es einen Benutzer, der die Client-Workstation (110) verwendet, durch die Nachricht informiert.

6. EDMS (100, 200, 300, 400) nach einem der Ansprüche 1 bis 5, wobei die Korrelationsmodul-Nachrichtenempfehlungsoptionen (i-v) weiterhin eine Anweisung zum Ausführen der empfohlenen Aktion und/oder eine Anweisung zum Ausführen der empfohlenen Aktion umfassen.

7. Verfahren zur Verwendung eines Systems zur Verwaltung von empirischen Daten (EDMS) (100, 200, 300, 400) nach einem der Ansprüche 1 bis 6, umfassend die folgenden Schritte:

(a) Bereitstellen eines EDMS (100, 200, 300, 400) nach einem der Ansprüche 1 bis 5;
(b) Empfangen von Daten in dem Anwendungsdatenserver (130), wobei die Daten von dem Prozessinstrument und von der Umgebungssensoreinheit (190, 210) empfangen werden;
(c) Bestimmen in dem Korrelationsmodul, ob eine Korrelation zwischen zwei oder mehr Prozessdaten, Umgebungsdaten und spezifizierten Umgebungsbetriebsbereichen des Prozessinstruments vorliegt, und
(d) wenn in Schritt (c) bestimmt wird, dass eine Korrelation vorliegt, Informieren eines Benutzers durch eine Nachricht, die den Benutzer warnt, dass die als Metadaten in der aggregierten Datendatei gespeicherten Umgebungsdaten nicht innerhalb der spezifizierten Umgebungsbetriebsbereiche der Prozessausrüstung liegen, und durch eine weitere Nachricht, die ausgewählt ist aus der Gruppe bestehend aus: (i) einer Empfehlung, Prozessdaten zu modifizieren; (ii) einer Empfehlung, einen Korrektur- oder Offset-Faktor für Prozessdaten zu berechnen; (iii) einer Empfehlung, ein Ergebnis zu modifizieren; (iv) einer Empfehlung, den Versuchs- oder Herstellungsprozess abzubrechen; und (v) einer Empfehlung, einen Prozessschritt, einen Prozessablauf oder ein Prozessprotokoll im Versuchs- oder Herstellungsprozess zu modifizieren.

## Revendications

1. Système de gestion de données empiriques (EDMS) (100, 200, 300, 400) tel qu'un système de bloc-notes de laboratoire électronique (ELN) ou un système de gestion d'informations de laboratoire (LIMS), ledit EDMS (100, 200, 300, 400) comprenant : un serveur d'application (130) exécutant une application de serveur EDMS ; un instrument de processus en communication avec le serveur d'application (130), dans lequel l'instrument de processus est configuré pour déterminer des données de processus à partir d'un processus expérimental ou de fabrication ; une unité de capteur environnemental (190, 210) en communication avec le serveur d'application (130), dans lequel l'unité de capteur environnemental (190, 210) est configurée pour déterminer des données environnementales décrivant une condition environnementale de l'instrument de traitement ; un système de stockage de données en communication avec le serveur d'application (130), dans lequel le système de stockage de données comprend des plages de fonctionnement environnementales spécifiées de l'instrument de processus et un fichier de données agrégées comprenant des données de processus reçues en provenance de l'instrument de processus et des données environnementales reçues en provenance de l'unité de capteur environnemental (190, 210) décrivant la condition environnementale de l'instrument de processus, dans lequel les données environnementales sont stockées dans le fichier de données agrégées sous forme de métadonnées qui caractérisent la condition environnementale de l'instrument de processus au moment où les données de processus sont reçues en provenance de l'instrument de processus ; et un module de corrélation programmé avec des instructions et une logique pour comparer des données stockées dans le système de stockage de données, y compris les plages de fonctionnement environnementales spécifiées de l'instrument de processus et des données environnementales stockées sous forme de métadonnées dans le fichier de données agrégées pour déterminer s'il existe une corrélation entre des données environnementales stockées sous forme de métadonnées dans le fichier de données agrégées et les plages de fonctionnement spécifiées de l'instrument de processus, dans lequel la corrélation est de savoir si les données environnementales stockées sous forme de métadonnées dans le fichier de données agrégées se trouvent ou non dans les plages de fonctionnement spécifiées de l'instrument de processus, dans lequel, lors de la détermination de l'existence de la corrélation, le module de corrélation est programmé avec des instructions et une logique pour solliciter un utilisateur avec un message avertissant l'utilisateur que des données environnementales stockées sous forme de métadonnées dans le fichier de données agrégées ne se trouvent pas dans les plages de fonctionnement environnementales spécifiques de l'équipement de processus et un autre message sélectionné dans le groupe constitué par : (i) une recommandation de modification des données de processus ; (ii) une recommandation de calcul d'un facteur de correction ou de décalage pour des données de processus reçues en provenance de l'instrument de processus ; (iii) une recommandation de modification d'un résultat du processus expérimental ou de fabrication ; (iv) une recommandation d'abandon du processus expérimental ou de fabrication ; et (v) une recommandation de modification d'une étape de processus, d'un cycle de processus ou d'un protocole de processus du processus expérimental ou de fabrication.

2.   EDMS (100, 200, 300, 400) selon la revendication 1, dans lequel le système EDMS (100, 200, 300, 400) comprend en outre une unité de commande d'instrument (180) en communication avec l'unité de capteur environnemental (190, 210) et/ou l'instrument de processus et le serveur d'application (130), dans lequel l'unité de commande d'instrument (180) comprend du matériel, des instructions et une logique pour recevoir le message reçu en provenance du module de corrélation et pour fournir le message à l'utilisateur, et éventuellement dans lequel l'unité de commande d'instrument (180) est une unité d'interface d'instrument (IIU) programmée avec des instructions et une logique pour établir un flux de travail de processus commandé par un utilisateur et pour établir un flux de données commandé entre le serveur d'application (130) et l'instrument de processus et/ou l'unité de capteur environnemental (190, 210), par exemple dans laquelle l'IIU comprend un ou plusieurs éléments de matériel sélectionnés dans le groupe constitué par : un écran, un scanner de code-barres, un scanner RFID, un lecteur NFC, un scanner de code QR, un haut-parleur, un microphone, un capteur de geste sans contact, une interface de paiement sécurisée et une caméra, par exemple dans lequel les un ou plusieurs éléments de matériel sont configurés pour recevoir des données entrées par l'utilisateur.

3.   EDMS (100, 200, 300, 400) selon la revendication 1 ou 2, dans lequel les plages de fonctionnement environnementales spécifiées de l'instrument de processus comprennent des plages de variables environnementales sélectionnées dans le groupe constitué par : la température, l'humidité, l'intensité lumineuse, les longueurs d'onde lumineuses, les vibrations, la concentration en gaz, la pression atmosphérique, la concentration en composés organiques volatils (COV), le niveau de particules, le niveau de pollution atmosphérique, les informations d'étalonnage, les informations d'utilisateur et les informations d'utilisation d'équipement, et éventuellement dans lequel les données stockées dans le système de stockage comprennent en outre des types de données sélectionnés dans le groupe constitué par des données de projet, des données d'expérience, des données d'objet, des données d'utilisateur, des données d'inventaire, des données de maintenance et des données d'utilisation.

4.   EDMS (100, 200, 300, 400) selon l'une quelconque des revendications 1 à 3, dans lequel l'instrument de processus est choisi dans le groupe constitué par : un équipement de laboratoire, un équipement de fabrication, un équipement de test, un équipement médical et un équipement de gestion d'installation et dans lequel la détermination de corrélation est effectuée par une analyse statistique et/ou une comparaison statistique de deux ou plusieurs parmi des données de processus, des données environnementales et des plages de fonctionnement environnementales spécifiées de l'instrument de processus.

5.   EDMS (100, 200, 300, 400) selon l'une quelconque des revendications 1 à 4, comprenant en outre un poste de travail client (110) exécutant une application client EDMS en communication avec le serveur d'application (130), dans lequel lors de la détermination de l'existence de la corrélation, le module de corrélation est programmé avec des instructions et une logique pour solliciter un utilisateur utilisant le poste de travail client (110) avec le message.

6.   EDMS (100, 200, 300, 400) selon l'une quelconque des revendications 1 à 5, dans lequel les options de recommandation de message de module de corrélation (i à v) comprennent en outre une instruction d'effectuer l'action recommandée et/ou une instruction sur la façon d'effectuer l'action recommandée.

7.   Procédé d'utilisation d'un système de gestion de données empiriques (EDMS) (100, 200, 300, 400) selon l'une quelconque des revendications 1 à 6, comprenant les étapes consistant à :

(a) fournir un EDMS (100, 200, 300, 400) selon l'une quelconque des revendications 1 à 5 ; (b) recevoir des données dans le serveur de données d'application (130), les données étant reçues en provenance de l'instrument de processus et de l'unité de capteur environnemental (190, 210) ; (c) déterminer dans le module de corrélation s'il existe une corrélation entre deux ou plusieurs parmi des données de processus, des données environnementales et des plages de fonctionnement environnementales spécifiées de l'instrument de processus, et (d) s'il est déterminé à l'étape (c) qu'une corrélation existe, solliciter un utilisateur avec un message avertissant l'utilisateur que les données environnementales stockées sous forme de métadonnées dans le fichier de données agrégées ne se trouvent pas dans les plages de fonctionnement environnementales spécifiées de l'équipement de processus et un autre message choisi dans le groupe constitué par : (i) une recommandation de modification des données de processus ; (ii) une recommandation de calcul d'un facteur de correction ou de décalage pour des données de processus ; (iii) une recommandation de modification d'un résultat ; (iv) une recommandation d'abandon du processus expérimental ou de fabrication ; et (v) une recommandation de modification d'une étape de processus, d'un cycle de processus ou d'un protocole de processus du processus expérimental ou de fabrication.

Figure 1

Figure 2

Figure 3

Figure 4

Figure 5

120

140

195

160

Data
Analysis
Package

Web Client
Workstation

Web
Server

Long-term
Archive

150

Client
Workstation

Application
Server

Database

110

130

180

170

Instrument
Control Unit

Analytical
Instrument

210

190

Sensor
Control Unit

Environmental
Sensor

200

Figure 6

Figure 7

Figure 8

Figure 9

Figure 10

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62739427
- US 589347 A
- US 16589713 B
- US 201953941 W
- US 201953977 W
- US 20070208800 A
- US 8984083 B
- US 8548950 B
- US 9954976 B
- US 9489485 B
- US 7555492 B
- US 2019242741 A1
- US 2004122297 A1
- US 20070208800 A1
- US 62739441 A
- US 62800900 A
- US 1953977 W
- US 62739419 A
- US 1954020 W
- US 62800900 B
- US 16589713 W
- US 3996434 A
- US 4241337 A
- US 4691195 A
- US 4463348 A
- US 9842151 B
- US 6725232 B
- US 7250950 B

### Non-patent literature cited in the description

- **C. WILLOUGHBY** ; **C. L. BIRD** ; **S. J. COLES** ; **J. G. FREY**. Creating Context for the Experiment Record. User-Defined Metadata: Investigations into Metadata Usage in the LabTrove ELN. *Journal of Chemical Information and Modeling*, 2014, vol. 54, 3268-3283
- **J. F. KRZYZANIAK** ; **G. R. WILLIAMS** ; **N. NI**. Identification of Phase Boundaries in Anhydrate/Hydrate Systems. *J. Pharma. Sci.*, 2007, vol. 96, 1270-1281
- **Y BENJAMINI** ; **Y HOCHBERG**. Controlling the False Discovery Rate: a Practical and Powerful Approach to Multiple Testing. *J. Royal Statistical Soc. B*, 1995, vol. 57, 289-300
- **C. WILLOUGHBY** ; **C. L. BIRD** ; **S. J. COLES** ; **J. G. FREY**. Creating Context for the Experiment Record. User-Defined Metadata: Investigations into Metadata Usage in the LabTrove ELN. *Journal of Chemical Information and Modeling*, 2014, vol. 54, 3268-3283, http://www.artel-usa.com/resource-library/does-weather-affect-pipetting-yes/